# EUROPEAN PATENT SPECIFICATION

(11) **EP 3 224 896 B1**
(45) Date of publication and mention of the grant of the patent: **24.10.2018**
(21) Application number: 15797361.1
(22) Date of filing: 20.11.2015
(51) Int. Cl.: H01M 10/613, H01M 10/643, H01M 10/654, H01M 2/10, H01M 10/04, H01M 2/26, B60L 11/18, H01M 10/625, H01M 10/6561, H01M 10/6567

(54) **RECHARGEABLE BATTERY, COOLING SYSTEM THEREFOR AND METHOD OF MANUFACTURE**
AKKUMULATOR, KÜHLSYSTEM DAFÜR UND VERFAHREN ZUR HERSTELLUNG DAVON
BATTERIE RECHARGEABLE, SYSTÈME DE REFROIDISSEMENT DE CELLE-CI ET PROCÉDÉ DE FABRICATION

(30) Priority: 24.11.2014 GB 201420823
(43) Date of publication of application: 04.10.2017
(73) Proprietor: Jaguar Land Rover Limited, Coventry, Warwickshire CV3 4LF (GB)
(72) Inventor: NICHOLLS, Stephen, Coventry Warwickshire CV3 4LF (GB)
(74) Representative: HGF Limited
(86) International application number: PCT/EP2015/077224
(87) International publication number: WO 2016/083261

(56) References cited:
- EP-A1- 1 028 439
- WO-A1-02/093597
- FR-A1- 3 004 292
- JP-A- 2012 174 344

## Description

### TECHNICAL FIELD

The present disclosure relates to rechargeable cells, to systems for cooling one or more such rechargeable cells and to methods of manufacture of a rechargeable cell. Additionally the disclosure relates to a core insert for a rechargeable cell and to a rechargeable cell comprising such a core insert. Furthermore the disclosure relates to a battery pack comprising a plurality of rechargeable cells, a cooling system for the same and a vehicle comprising such a battery pack and such a cooling system. More particularly, but not exclusively, the disclosure relates to rechargeable cylindrical cells that are centrally cooled. Embodiments of the invention find advantageous application in a wide variety of applications where rechargeable batteries and/or battery packs are utilised in particular, but not exclusively, in electric vehicles (EVs) and hybrid electric vehicles (HEVs).

Aspects of the invention relate to a rechargeable cell, to a system for cooling one or more such rechargeable cells, to methods of manufacture of a rechargeable cell, to a core insert for a rechargeable cell, to a cooling apparatus, to a battery pack comprising a plurality of rechargeable cells and to a vehicle.

### BACKGROUND

Rechargeable cylindrical cells (referred to simply as cylindrical cells) are popular for a wide variety of applications. A popular Lithium Ion rechargeable cylindrical cell is the well-known 18650 cylindrical cell (named because of its 18mm diameter and 65mm height). Such, and similar, cylindrical cells comprise a cylindrical roll of material sealed within an enclosed outer casing. The cylindrical roll is formed by rolling up a length of layered material that typically comprises two layers of active material separated by two layers of insulating material (also referred to as a separator material). Typically a conductive tab connected at one end of a layer of active material provides a negative connection for the negative terminal of the rechargeable cylindrical cell and this is electrically connected to the base of the outer casing. Typically an electrical connection to the other end of the other layer of active material is electrically connected to a cap, which closes off the outer casing and provides the positive terminal. The cap also typically houses a current interrupt device (CID) which serves to protect the cylindrical cell from overcharging.

Such cylindrical cells beneficially offer a greater energy density compared to other designs of rechargeable cell, such as prismatic cells and pouch cells. Disadvantageously however, such cylindrical cells can be challenging to cool because of the very low external surface area available for dissipation of heat energy. Furthermore, despite the uniform shape and even heat transfer associated with cylindrical cells, the centre of the cell, which is furthest from the external surfaces, is typically the hottest part of the cylindrical cell. Heating is an important factor affecting the lifetime (sometimes measured in numbers of discharge cycles) of a rechargeable cell. When a high electrical demand is suddenly placed on a cylindrical cell it can heat up quickly, the central region of the cell can become hot, and this can have a deleterious effect on the lifetime of the cell. As such, though cylindrical cells offer a greater energy density, their use in certain applications is limited or is not viable.

The present invention seeks to provide an improvement in the field of rechargeable cylindrical cells. Whilst rechargeable cylindrical cells and other aspects of the present disclosure have particular application in EVs and HEVs, cylindrical cells according to the disclosure may nevertheless be utilised in applications other than for vehicles.

In JP2012174344, a technology is described which is capable of suppressing internal temperature rise of a battery. A hollow cylinder formed integrally with a lid is provided, and the hollow cylinder is inserted into a shaft core. Since temperature rise can be suppressed near the shaft core according to a lithium ion battery, performance degradation of the lithium ion battery LIB due to internal temperature rise can be suppressed effectively.

In FR3004292, a lithium storage cell comprising at least one electrochemical cell, two current collectors, one of which is connected to the anode and the other to the cathode, a housing having a longitudinal axis (X) and a central core along the X-axis, the central core being hollow at least over a part of its height. The hollow part of the central core opens outside the housing via the bottom and / or the cover.

In WO02/093597, a method for cooling an electrolytic capacitor comprising a casing that surrounds a capacitive element, and to an electrolytic capacitor. The casing is provided with a hollow, and a cooling element made of an electrically insulating material is placed in the hollow, the cooling element comprising at least one duct, which can be arranged to receive a cooling medium. Since the cooling element placed in the hollow is made of an electrically insulating material, the cooling medium can be liquid, such as water.

### SUMMARY OF THE INVENTION

Aspects of the invention provide a rechargeable cylindrical cell, a system for cooling one or more such rechargeable cylindrical cells, methods of manufacture of a rechargeable cylindrical cell, a core insert for a rechargeable cylindrical cell, a cooling apparatus, a battery pack comprising a plurality of rechargeable cylindrical cells and a vehicle as claimed in the appended claims.

According to an embodiment of the invention, there is provided a rechargeable cell comprising an outer casing, a roll and a protective cap fitted onto the top of the outer casing, the roll comprising layers of active and insulator material disposed within the outer casing, wherein an active layer of material of said roll is electrically connected to a positive terminal within the protective cap, the rechargeable cell additionally comprising an externally accessible hollow core which enables central cooling of the rechargeable cell, the hollow core being externally accessible by means of an aperture in a base of the outer casing opposite the protective cap and a core insert, wherein the core insert is formed of an electrically conductive material, wherein the core insert is electrically connected to an active layer of material of said roll not electrically connected to the positive terminal, and wherein the core insert provides an electrode of the rechargeable cylindrical cell; characterised in that: the core insert is electrically connected to the active layer of material along the entire axial length of the active layer of the roll. Beneficially, therefore, the rechargeable cell can be centrally cooled.

Optionally, the roll and/or the outer casing are at least substantially cylindrical in shape, such that the rechargeable cell is a rechargeable cylindrical cell.

Optionally the roll, comprising layers of active and insulator material, is formed around a mandrel such that the roll comprises a central bore and wherein part of the core insert is inserted into that central bore and is not electrically connected to any layer of the roll.

Optionally, the core insert comprises an elongate member and an insert base, wherein the elongate member is disposed in a central bore of said roll, and wherein the insert base is affixed to the base of the outer casing to seal the roll within the outer casing whilst facilitating access to the externally accessible hollow core thereby formed.

Optionally, the elongate member is generally cylindrical and hollow, and is closed at an upper end thereof.

Optionally, the upper end of the elongate member is crimped closed.

Optionally, the core insert is formed from the same material as the outer casing of the rechargeable cell.

Optionally, the core insert is formed from steel.

Optionally, the insert base is welded to the base of the outer casing.

Optionally the core insert is formed, at least in part, from a plastics material.

According to another embodiment, there is provided a battery pack comprising a plurality of rechargeable cylindrical cells according to any of the relevant preceding paragraphs. According to a further example of the disclosure, there is provided a system for cooling a rechargeable cell having an externally accessible hollow core, the system comprising at least one finger configured and arranged for insertion at least partially into said externally accessible hollow core of a rechargeable cell, said at least one finger comprising a first pathway for an inbound flow of coolant and a second pathway for an outbound flow of coolant.

Optionally, the coolant is a coolant liquid or a gas and the first pathway provides for the supply of cooled coolant into the finger, and the second pathway provides for the extraction of heated coolant from the finger.

Optionally, the first pathway is disposed innermost of the finger and the second pathway is disposed outermost of the finger.

Optionally, the second pathway has an annular cross-sectional shape.

Optionally, the first pathway comprises an open upper end, and the second pathway comprises an open upper end such that the inbound flow of coolant can be pumped through the first pathway, and such that the outbound flow of coolant is pumped out through the second pathway and adjacent to the walls of the hollow core.

Optionally, the system is for cooling a battery pack comprising a plurality of rechargeable cells and the system comprises a plurality of fingers, each for being at least partially inserted into a hollow core of one of the rechargeable cells.

Optionally, the plurality of fingers are arranged to optimise nesting of adjacent rechargeable cells.

Optionally, the plurality of fingers are arranged in diagonal rows such that the rechargeable cells can nest in a honeycomb style arrangement.

According to yet another example of the disclosure, there is provided a cooling apparatus for use in a system for cooling a plurality of rechargeable cells each having an externally accessible hollow core. The cooling apparatus comprises a block of heat conductive material and comprises a plurality of bores, each bore for receiving one of said plurality of rechargeable cells. The plurality of bores are arranged to optimise nesting of adjacent rechargeable cells, wherein a distance (spacing) between adjacent bores is less than or equal to about 0.5mm. In other words the distance between the centre point of one bore and the centre point of an adjacent bore may be spaced apart by a distance that is less than or equal to about 18.5mm.

According to yet a further embodiment, there is provided a vehicle comprising a battery pack comprising a plurality of cells as described above.

According to yet even a further aspect, there is provided a method of manufacture of a rechargeable battery cell as described above, the method comprising:
(i) electrically connecting a core insert to an active layer of a material comprising layers of active and insulator material, the core insert being electrically connected to the active layer of material along its entire axial length, wherein the core insert provides a negative electrode of the rechargeable battery cell, the core insert having an elongate member that is closed at a first end thereof and has a base portion at a second end thereof; and
(ii) winding said material about the core insert to form a roll and integral core insert;
(iii) inserting said roll and core insert, together as a single unit, into an outer casing (38) having an aperture in a base thereof, such that the base portion of the core insert passes through said aperture; and
(iv) affixing the base portion of the core insert to the base of the outer casing to seal said roll within the outer casing and to form an externally accessible hollow core which enables central cooling of the rechargeable cell
   the method characterised by:
   electrically connecting the core insert to the active layer of material along the entire axial length of the active layer of the roll.

According to another example of the disclosure, there is provided a method of manufacture of a rechargeable battery cell, the method comprising:
providing an outer casing having a base comprising an aperture;
positioning a roll of material comprising layers of active and insulator material into the outer casing;
inserting part of a core insert, having an elongate member and an insert base, into a central core of the roll; and
affixing said insert base to the base of the outer casing to form an externally accessible hollow core which enables central cooling of the rechargeable cell.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### BRIEF DESCRIPTION OF THE DRAWINGS

One or more embodiments of the invention will now be described, by way of example only, with reference to the accompanying drawings, in which:
FIGURE 1A is a schematic representation of a view through the centre of a rechargeable cell according to an embodiment of the invention;
FIGURE 1B is a schematic representation of a view through the centre of the rechargeable cell of Figure 1A, wherein the roll of active and insulator material has been removed to show more clearly an externally accessible hollow core of the rechargeable cell;
FIGURE 2A is a plan view of the bottom of the rechargeable cell of Figures 1A and 1B;
FIGURE 2B is a perspective view of a core insert used to form a rechargeable cell according to various embodiments of the invention;
FIGURE 3 is a cross-sectional view of part of a cooling system for use with rechargeable cells as shown in Figures 1A, 1B and 2A;
FIGURE 4 is a cross-sectional view of the cooling system shown in Figure 3 and part of a rechargeable cell according to various embodiments, mounted therein and being centrally cooled using its externally accessible central core;
FIGURE 5A is a plan view of a cooling apparatus for use in a cooling system such as that shown in Figure 4;
FIGURE 5B is a perspective, partially cut away view of a cooling apparatus for use in a cooling system such as that of Figure 4, wherein a plurality of rechargeable cells have been mounted within the apparatus with fingers of the cooling system disposed within the externally accessible hollow core of each rechargeable cell;
FIGURE 6 is an illustration of part of a first method of manufacture of a rechargeable cell, wherein a perspective illustration of a piece of active material being electrically connected to, and about to be wound around, a core insert is shown;
FIGURE 7 is a schematic illustration of part of a second method of manufacture of a rechargeable cell according to an example of the disclosure; and
FIGURE 8 is an electric vehicle comprising a battery pack and a cooling system according to various embodiments of the disclosure.

### DETAILED DESCRIPTION OF EMBODIMENTS

Detailed descriptions of specific embodiments of the rechargeable cells, battery packs, methods, core inserts, cooling systems and cooling apparatus of the present invention are disclosed herein. It will be understood that the disclosed embodiments are merely examples of the way in which certain aspects of the invention can be implemented and do not represent an exhaustive list of all of the ways the invention may be embodied. Indeed, it will be understood that the rechargeable cells, battery packs, methods, core inserts, cooling systems and cooling apparatus described herein may be embodied in various and alternative forms. The Figures are not necessarily to scale and some features may be exaggerated or minimised to show details of particular components. Well-known components, materials or methods are not necessarily described in great detail in order to avoid obscuring the present disclosure. Any specific structural and functional details disclosed herein are not to be interpreted as limiting, but merely as a basis for the claims and as a representative basis for teaching one skilled in the art to variously employ the invention.

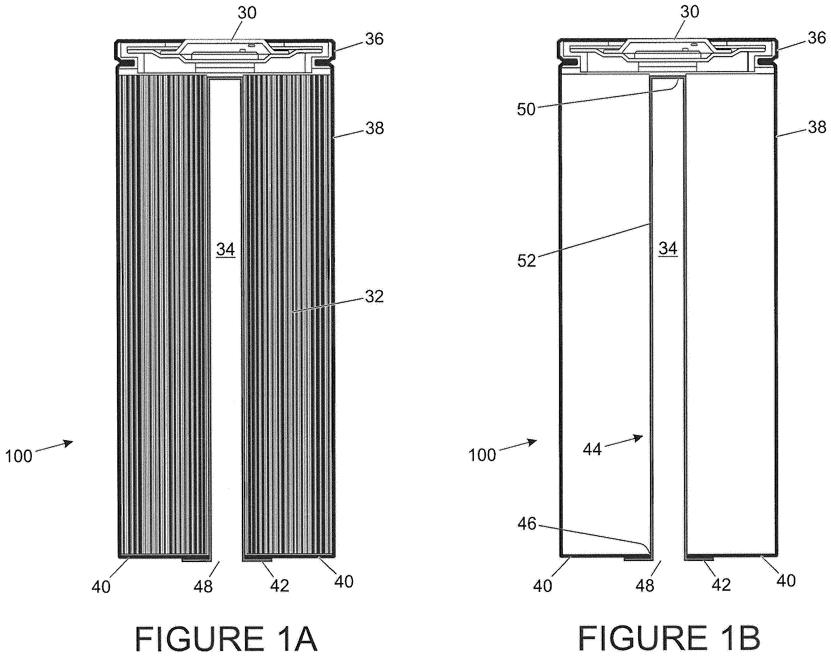

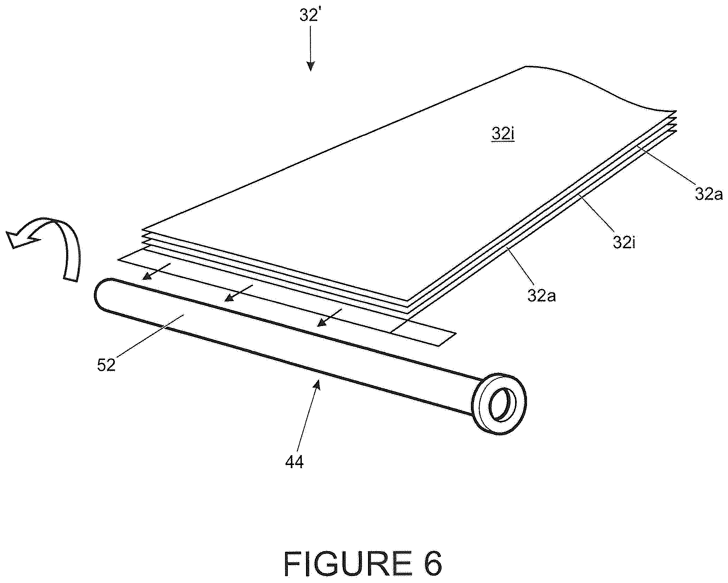

In Figure 1A there is shown a rechargeable cell 100 according to an optional illustrated embodiment. The rechargeable cell 100 has a generally cylindrical structure and may be referred to as a "cylinder cell". The rechargeable cell 100 comprises an outer casing 38 (also referred to as a "can" 38), which is optionally a press-formed steel structure which houses and protects the internal features of the rechargeable cell 100. Within the outer casing 38, the rechargeable cell 100 comprises a roll 32 comprising layers of active and insulator material. The roll 32 is sometimes referred to as a "jelly roll" 32 and, as illustrated in Figure 6, optionally comprises four layers of material: two layers of separator, insulator material 32i alternated between two active layers of material 32a. The active layers of material 32a may be formed from thin copper strips, printed with active material. The four layers are sandwiched or laminated and rolled, optionally about a cylindrical mandrel, to create a roll 32 of material of annular cross-section and having a hollow, central bore.

An electrical connection between one of the active layers of material 32a is connected to a positive terminal 30 disposed within a protective cap 36 fitted onto the top of the can 38. A further electrical connection between the other one of the active layers of material 32a and the base 40 of the outer casing 38 provides a negative terminal.

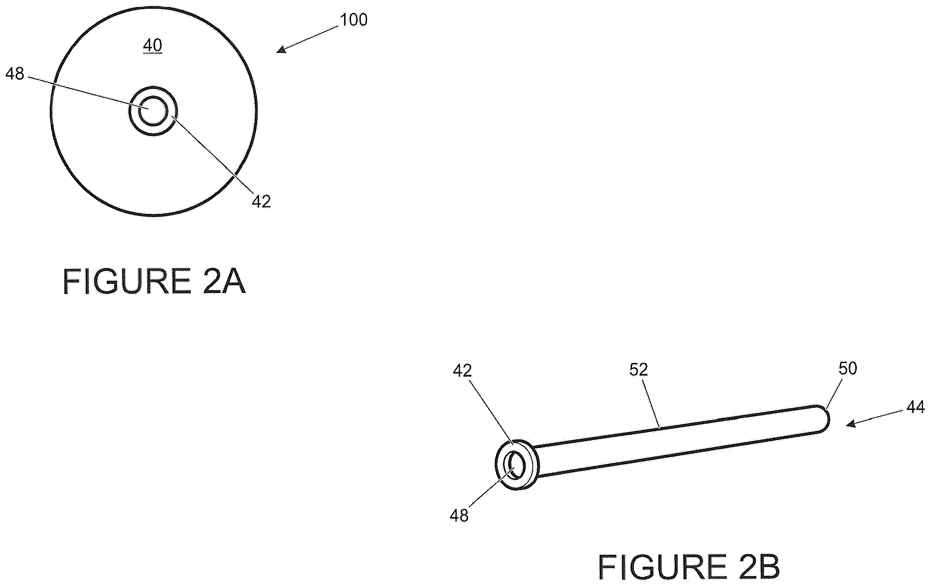

The rechargeable cell 100 additionally comprises an externally accessible hollow core 34 by which the rechargeable cell 100 can be centrally cooled. In Figure 1B, the jelly roll 32 has been removed in order to more clearly illustrate the externally accessible hollow core 34. The hollow core 34 in the present embodiment is formed from a core insert 44 (see Figure 2B). The core insert 44 comprises an elongate member 52 that is sufficiently rigid to define the hollow core 34 and to protect the jelly roll 32 disposed inside the rechargeable cell 100. The hollow core 34 is externally accessible because a base 40 of the outer casing 38 has an aperture 46 therein which is aligned with the core insert 44 defining the hollow core 34.

The roll 32 and the outer casing 38 have a substantially cylindrical outer shape, such that the rechargeable cell 100 may be referred to as a cylindrical cell. The inclusion of the hollow core 34 has the effect of forming a region of the rechargeable cell 100 having an annular or ring shaped cross section.

The core insert 44 forming the hollow core 34 in the present embodiment is a separate piece to the outer casing 38 (see Figure 2B) and is affixed to a base 40 of the outer casing 38, as shown in plan view in Figure 2A. The core insert 44 additionally comprises a closed upper end 50. The closed upper end 50 may be formed simply by crimping the ends of the elongate tube member 52. The core insert 44 further comprises an insert base 42 which is provided for affixing the core insert 44 to the base 40 of the outer casing 38. An aperture 48 within the insert base 42 allows the hollow core 34 to be externally accessible.

In the present arrangement, the core insert 44 is formed from the same material as the outer casing 38 of the rechargeable cell 100. The outer casing 38 and the core insert 44 are optionally both formed from steel. As such, once the elongate member 52 is disposed within the central bore of said roll 32, the insert base 42 is affixed to the base 40 of the outer casing 38 to seal the roll 32 within the outer casing 38 whilst facilitating access to the externally accessible hollow core 34 thereby formed. The insert base 42 is optionally welded to the base 40 of the outer casing 38 to ensure that the outer casing 38 and core insert 44 form a sealed unit which encases the roll 32. In alternative embodiments the core insert 44 is formed, at least in part, from a plastics material.

The provision of an externally accessible lined, hollow core 34 within the rechargeable cell 100 provides a means by which the rechargeable cell 100 can be centrally cooled. The central cooling of the rechargeable cell 100 may be carried out instead of, or in conjunction with, cooling of the external outer surface of the rechargeable cell 100 (generally defined by the outer casing 38). The capability of cylindrical rechargeable cells 100 to be centrally cooled permits the rechargeable cells 100 of the present disclosure to be more widely used and used in applications where traditional cylindrical cells could not be used because of the challenges associated with cooling them. Additionally, rechargeable cells 100 of the present disclosure may be formed in larger sizes than traditional cylindrical, non-centrally cooled cells could be made.

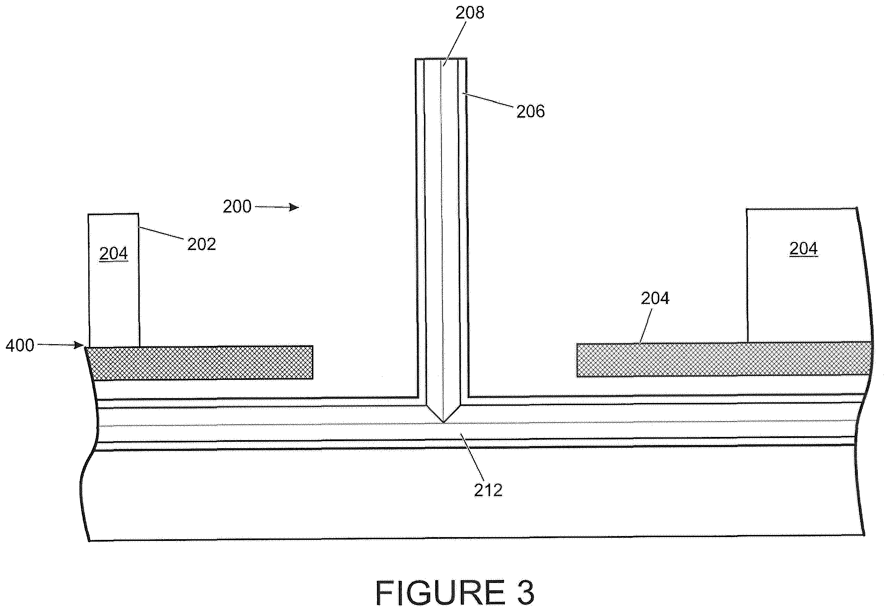

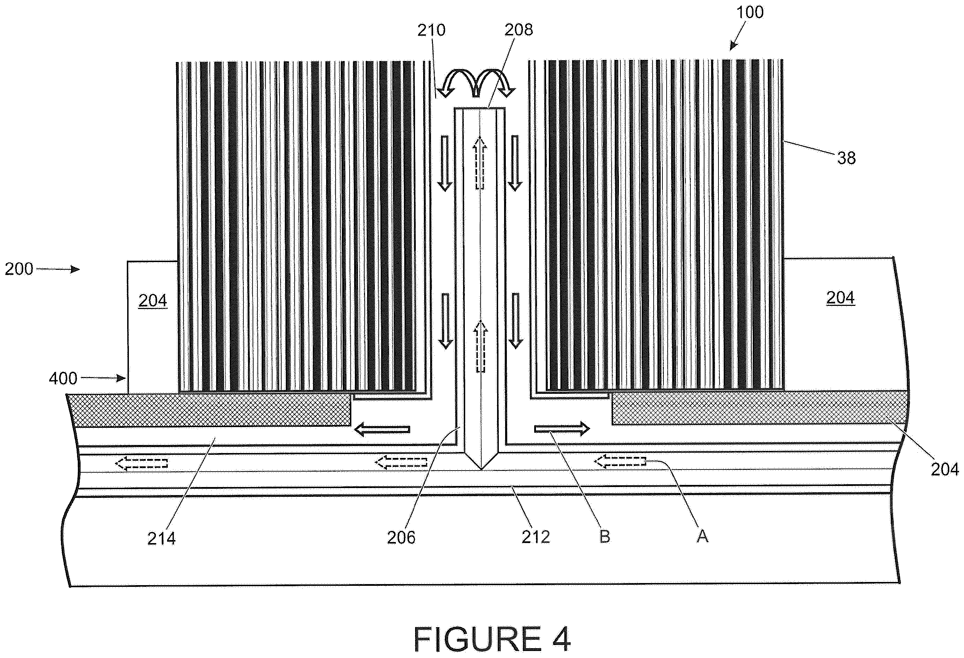

In Figure 3, a cooling system 200, which forms another aspect of the present disclosure, is shown. The cooling system 200 optionally comprises a cooling apparatus 400 in the form of a block 204 having bores 202 formed therein into which one or more rechargeable cells 100 can be mounted (see Figure 4). The cooling system 200 additionally comprises at least one finger 206 configured and arranged for insertion at least partially into the externally accessible hollow core 34 of a rechargeable cell 100 (see Figure 4). The at least one finger 206 comprises a first pathway 208 for an inbound flow of coolant and defines a second pathway 210 for an outbound flow of coolant. As shown in the optional illustrated arrangement, the first pathway 208 is disposed innermost of the finger 206 and the second pathway 210 is disposed on the outside of the finger 206. The second pathway 210 may be defined by an outer surface of the finger 206 and a surface of the hollow core 34 of the rechargeable cell 100. As such, the second pathway 210 has an annular cross-sectional shape.

As shown in Figure 4, the first pathway 208 comprises an open upper end and the second pathway 210 comprises an open upper end such that the inbound flow of coolant can be pumped through the first pathway 208 and into the second pathway 210 adjacent to walls of the hollow core 34 for extracting heat energy from the centre of the rechargeable cell 100. This is best seen in Figure 4, wherein the flow of coolant is illustrated by arrows. Dashed grey arrows (A) have been used to schematically illustrate an optional flow path for inbound cool coolant supplied by conduit 212 and solid darker arrows (B) have been used to schematically illustrate an optional flow path for outbound heated coolant which is extracting heat from the core of the rechargeable cell 100 in route or conduit 214. As such the second pathway 210 for the outbound flow of coolant may be defined by the core insert 34 itself and channels within the cooling apparatus 400. The outer case 38 is affixed to the block 204 in this arrangement in order to seal the coolant within the cooling system 200 and to prevent cooling fluid leaking out of the cooling areas.

In other embodiments the system for cooling a rechargeable cell 100 comprises a finger having one or more additional pipes or conduits for the outbound flow of coolant and/or a cooling apparatus 400 having one or more additional pipes or conduits for the outbound flow of coolant.

The coolant may be a coolant liquid or a gas. The coolant is circulated, optionally by pumping throughout the system, and passes a heat exchanger (not shown) which extracts heat energy from the coolant before re-circulating the coolant back into the first pathway for continually supplying cooled coolant into the finger 206 and hence into the hollow core 34 of the rechargeable cell 100.

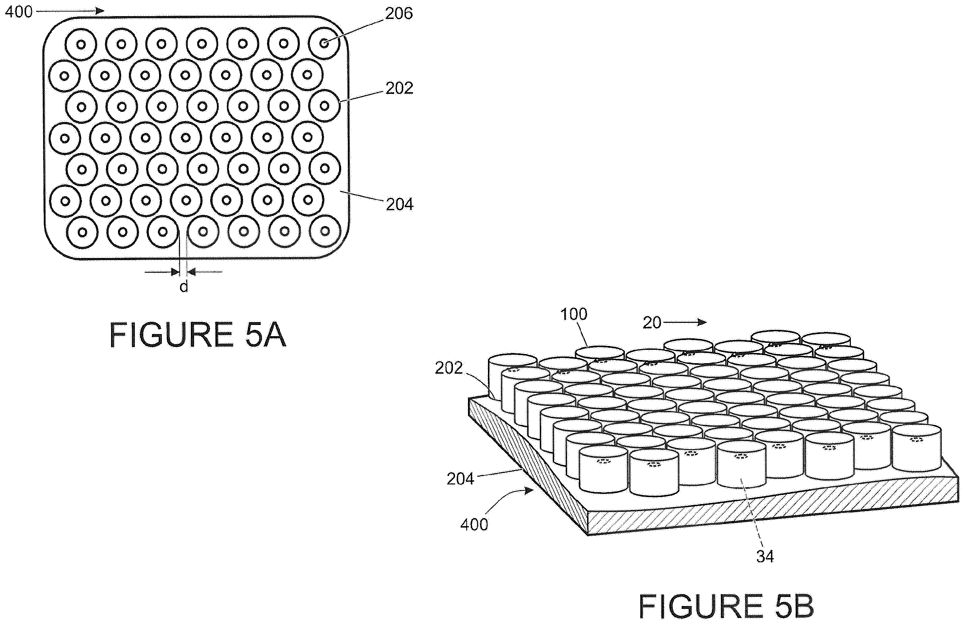

The system 200 may comprise a plurality of fingers, each for being at least partially inserted into a hollow core 34 of one of a plurality of rechargeable cells 100. A cooling apparatus 400 and a plurality of fingers 206 of such a cooling system 200 are shown schematically in plan view in Figure 5A. It can be seen that the apparatus 400 is a substantially solid block 204 into which a plurality of bores 202 have been formed, each sized for receiving a rechargeable cell 100 and a finger 206. Due to central cooling of the rechargeable cells 100, the rechargeable cells 100 can be tightly packed or tightly nested. As such a plurality of fingers 206 of a cooling system 200 and a plurality of bores 202 of a cooling apparatus 400 are arranged to optimise nesting of adjacent rechargeable cells 100. In an optional arrangement the plurality of fingers 206 of the cooling system 200 and the plurality of bores 202 in the block 204 are arranged substantially in diagonal rows or otherwise arranged such that the rechargeable cells 100 can nest in a honeycomb style arrangement (see Figure 5A).

The cooling apparatus 400 for use in a system 200 for cooling a plurality of rechargeable cells 100 comprises a block 204 of heat conductive material such as, but not limited to, aluminium. As discussed and shown in Figure 5A, the plurality of bores 202 are arranged to optimise nesting of adjacent rechargeable cells 100 and because the block 204 is not relied upon for significant external cooling of the rechargeable cells 100, an average or a maximum distance 'd' between adjacent bores 202 is less than or equal to about 0.5 mm. In other words the distance between the centre point of one bore and the centre point of an adjacent bore may be less than or equal to about 18.5mm.

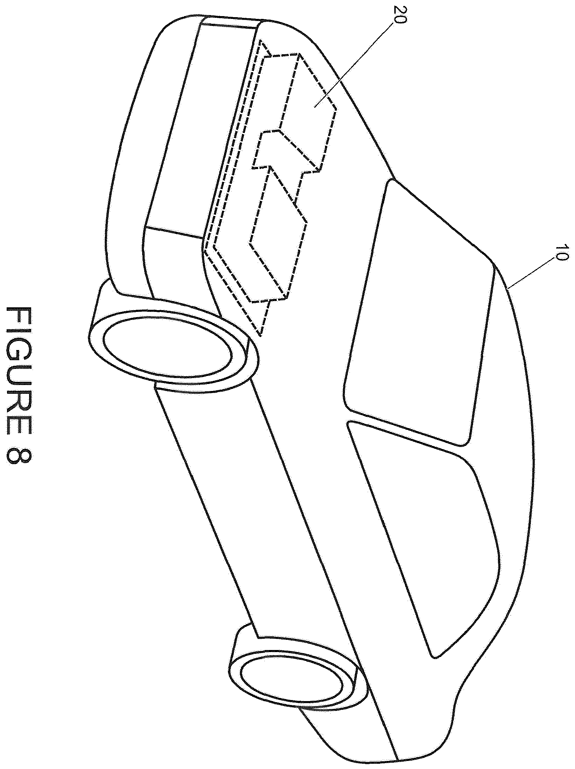

The rechargeable cell 100 of the present disclosure may be advantageously utilised in the formation of a rechargeable battery pack 20 (see Figure 5) comprising a plurality of rechargeable cells 100. As shown in Figure 8, a rechargeable battery pack 20 may find advantageous application in a vehicle 10, such as an EV or an HEV. A rechargeable battery pack 20 according to an aspect of the disclosure is formed in combination with a cooling apparatus 400 of a cooling system. Referring now to Figure 5B, there is shown a perspective illustration of a nested, optionally honeycomb style arrangement of a plurality of cells 100 each disposed in an individual bore 202 formed within a block 204 of a cooling apparatus 400. For illustrative purposes, the block 204 has been cut away to more clearly show the arrangement of rechargeable cells 100 therein. Again, because the block 204 is not relied upon for significant external cooling of the rechargeable cells 100, due to the provision of central cooling, an average or a maximum distance 'd' between adjacent bores 202 is less than or equal to about 0.5 mm. In other words the distance between the centre point of one bore and the centre point of an adjacent bore may be less than or equal to about 18.5mm.

As discussed above, the rechargeable cells 100 disclosed herein are formed with an internal hollow core 34 that is accessible externally of the rechargeable cell 100 such that the contents of the cell 100 remain encased and protected and such that the rechargeable cell 100 can be centrally cooled. In an embodiment of the disclosure, the rechargeable cells 100 are formed using a method of manufacture as illustrated in Figure 6. In such an arrangement, a core insert 44 forms the mandrel about which the jelly roll 32 is formed. The core insert may be (electrically or conductively) connected to an active layer 32a of the material 32' used to form the jelly roll 32, as shown by straight arrows in Figure 6. Then, the material 32' is wound about the core insert 44, as shown by the curled arrow in Figure 6 to form a roll 32 having an integral core insert 44. The core insert in such a method is effectively a core liner which also serves as the mandrel. Beneficially, such a method obviates the step of removing a separate mandrel and further beneficially provides an improved electrical connection to the negative terminal of the jelly roll 32 which may improve (reduce) the electrical resistance of the rechargeable cell 100.

As shown in Figure 6, and as described above, the core insert 44 has an elongate member 52 that is closed at a first end 50 and that initially is substantially straight at a second open end. Forming a rechargeable cell 100 further comprises inserting the jelly roll with the core insert 44 integrally formed therein, together as a single unit, into the outer casing 38. The base 40 of the outer casing 38 has an aperture 46 formed therein, such that the insert base 42 of the core insert 44 passes through said aperture 46 (as shown in Figure 1B). Finally, the insert base 42 (also referred to as the base portion 42 of the core insert 44) is formed by pressing and/or bending a section of the open end of the core insert 44, which base portion 42 is then affixed, optionally by welding, such as laser welding, to the base of the outer casing 38 to seal the roll 32 within the outer casing 38 to form a rechargeable cell 100 having an externally accessible hollow core 34.

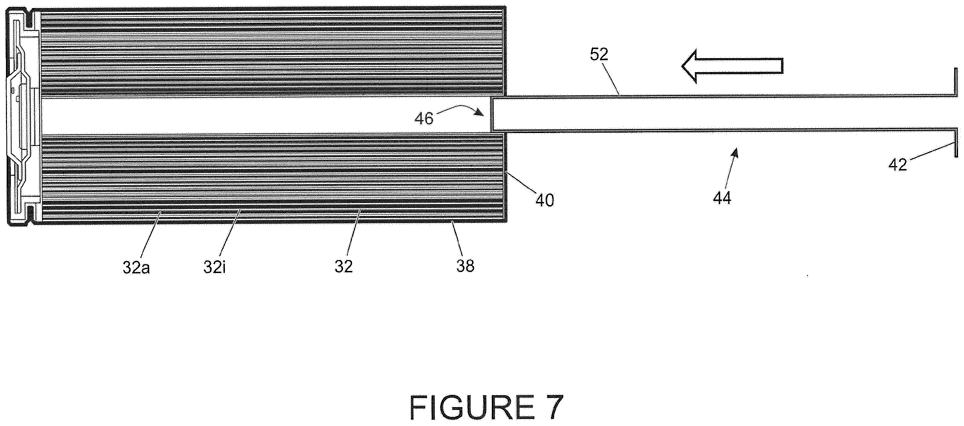

Referring now to Figure 7, there is illustrated a further example of a method of manufacture of a rechargeable battery cell 100. In this method, an outer casing 38 is provided which has a base 40 which comprises an aperture 46. The aperture may be punched, pressed or cut out of a solid base 40. Alternatively the outer casing 38 may be formed with an aperture 46 already therein. The roll of material 32, comprising layers of active 32a and insulator 32i material, is placed into the outer casing 38. Then part of a core insert 44 having an elongate member 52 and an insert base 42 is inserted into a central core of the jelly roll 32. The insertion of the jelly roll 32 is achieved by relative movement of the core insert 44 and outer casing 38 (see Figure 7). In other words, the core insert 44 may be pushed into the outer casing 38 and/or the outer casing 38 may be placed onto the core insert 44. Finally, the insert base 42 is affixed, optionally by welding or other means to the base 40 of the outer casing 38 to form a rechargeable cell 100 having an externally accessible hollow core 34.

It can be appreciated that various changes may be made within the scope of the present invention. For example, in other embodiments of the invention it is envisaged that an outer casing may be formed that has within it an integral core insert or core liner such that a region of the outer casing has an annular cross section. In such an arrangement, the jelly roll will be deposited into the outer casing, the bore of the roll 32 slotting over the integral core insert.

Whereas specific mention has been made of the known 18650 cylindrical cells, the rechargeable cells of the present disclosure may be formed in a wide range of diameters and heights and the rechargeable cells of the present disclosure are in no way limited to having an 18mm diameter and a 65mm height.

The term "rechargeable cell" as used herein is intended to refer to rechargeable cells wherein the layers of active and separator material are wound or coiled and formed into a substantially uniform roll, typically having a cylindrical shape, which is packed into an outer casing having a similar, substantially cylindrical shape. It will be appreciated, however, that the shape of the uniform roll created is governed by the shape of a mandrel, or other device, about which the roll is formed. As such, the term "rechargeable cell", as used herein may, where appropriate, also refer to non-cylindrical shapes of cell containing a packaged roll of active and separator material such as, but not limited to, elliptical, stadium-shaped, triangular, rounded triangular, square, rounded square, pentagonal, rounded pentagonal, hexagonal, rounded hexagonal and other polygonal and/or rounded polygonal shapes, if suitable. Aspects of the present disclosure have particular benefit to such rechargeable cells where as a result of the tightly packed roll of active and insulator material, heat build-up in the centre of the cell can present a problem. The modifications and/or improvements described herein provide rechargeable cells containing a roll of material with the advantage of having the capability to be centrally cooled.

## Claims

1. A rechargeable cell (100) comprising an outer casing (38), a roll (32) and a protective cap (36) fitted onto a top of the outer casing, the roll comprising layers of active and insulator material disposed within the outer casing, wherein an active layer (32a) of material of said roll is electrically connected to a positive terminal (30) within the protective cap, the rechargeable cell further comprising an externally accessible hollow core (34) which enables central cooling of the rechargeable cell, the hollow core being externally accessible by means of an aperture (46) in a base (40) of the outer casing opposite the protective cap and a core insert, wherein the core insert is formed of an electrically conductive material, wherein the core insert is electrically connected to an active layer of material of said roll not electrically connected to the positive terminal, and wherein the core insert provides an electrode of the rechargeable cylindrical cell; **characterised in that**:
the core insert is electrically connected to the active layer of material along the entire axial length of the active layer of the roll.

2. A rechargeable cell according to claim 1 wherein the roll and/or the outer casing are at least substantially cylindrical in shape, such that the rechargeable cell is a rechargeable cylindrical cell.

3. A rechargeable cell according to claim 1 or claim 2 wherein the roll comprising layers of active and insulator material is formed around part of the core insert.

4. A rechargeable cell according to any preceding claim wherein the core insert provides a negative electrode of the rechargeable cylindrical cell.

5. A rechargeable cell according to claim 1 or claim 2 wherein the roll comprising layers of active and insulator material is formed around a mandrel such that the roll comprises a central bore and wherein part of the core insert is inserted into that central bore and is not electrically connected to any layer of the roll.

6. A rechargeable cell according to any previous claim wherein the core insert comprises an elongate member and an insert base, wherein the elongate member is disposed in a central bore of said roll, and wherein the insert base is affixed to the base of the outer casing to seal the roll within the outer casing whilst facilitating access to the externally accessible hollow core thereby formed.

7. A rechargeable cell according to claim 6 wherein the elongate member is generally cylindrical and hollow, and is closed at an upper end thereof.

8. A rechargeable cell according to claim 7 wherein the upper end of the elongate member is crimped closed.

9. A rechargeable cell according to any previous claim wherein the core insert is formed from the same material as the outer casing of the rechargeable cell.

10. A rechargeable cell according to any previous claim wherein the core insert is formed from steel.

11. A rechargeable cell according to claim 6 wherein the insert base is welded to the base of the outer casing.

12. A rechargeable cell according to any of claims 1 to 7 wherein the core insert is formed, at least in part, from a plastics material.

13. A battery pack comprising a plurality of rechargeable cells according to any previous claim.

14. A method of manufacture of a rechargeable battery cell (100) according to any one of claims 1-12, the method comprising:
(i) electrically connecting a core insert to an active layer (32a) of a material comprising layers of active and insulator material, the core insert being electrically connected to the active layer of material along its entire axial length, wherein the core insert provides a negative electrode of the rechargeable battery cell, the core insert having an elongate member that is closed at a first end thereof and has a base portion at a second end thereof;
(ii) winding said material about the core insert to form a roll (32) and integral core insert;
(iii) inserting said roll and core insert, together as a single unit, into an outer casing (38) having an aperture (46) in a base (40) thereof, such that the base portion of the core insert passes through said aperture; and
(iv) affixing the base portion of the core insert to the base of the outer casing to seal said roll within the outer casing and to form an externally accessible hollow core (34) which enables central cooling of the rechargeable cell
the method **characterised by**:
electrically connecting the core insert to the active layer of material along the entire axial length of the active layer of the roll.

## Patentansprüche

1. Wiederaufladbare Zelle (100), umfassend ein Außengehäuse (38), eine Rolle (32) und eine Schutzabdeckung (36), die auf einer Oberseite des Außengehäuses angebracht ist, wobei die Rolle Schichten aus aktivem und Isoliermaterial umfasst, die in dem Außengehäuse angeordnet sind, wobei eine aktive Schicht (32a) aus Material der Rolle elektrisch mit einem Pluspol (30) in der Schutzabdeckung verbunden ist, wobei die wiederaufladbare Zelle ferner Folgendes umfasst: einen von außen zugänglichen hohlen Kern (34), der zentrales Kühlen der wiederaufladbaren Zelle ermöglicht, wobei der hohle Kern mittels einer Öffnung (46) in einer Basis (40) des Außengehäuses gegenüber der Schutzabdeckung von außen zugänglich ist, und einen Kerneinsatz, wobei der Kerneinsatz aus einem elektrisch leitfähigen Material ausgebildet ist, wobei der Kerneinsatz elektrisch mit einer aktiven Schicht aus Material der Rolle, die mit dem Pluspol nicht elektrisch verbunden ist, verbunden ist, und wobei der Kerneinsatz eine Elektrode der wiederaufladbaren zylindrischen Zelle bereitstellt; **dadurch gekennzeichnet, dass**:
der Kerneinsatz elektrisch mit der aktiven Schicht aus Material entlang der gesamten axialen Länge der aktiven Schicht der Rolle verbunden ist.

2. Wiederaufladbare Zelle nach Anspruch 1, wobei die Rolle und/oder das Außengehäuse wenigstens im Wesentlichen zylinderförmig ist, sodass die wiederaufladbare Zelle eine wiederaufladbare zylindrische Zelle ist.

3. Wiederaufladbare Zelle nach Anspruch 1 oder 2, wobei die Rolle, die Schichten aus aktivem und Isoliermaterial umfasst, um einen Teil des Kerneinsatzes herum ausgebildet ist.

4. Wiederaufladbare Zelle nach einem der vorhergehenden Ansprüche, wobei der Kerneinsatz eine negative Elektrode der wiederaufladbaren zylindrischen Zelle bereitstellt.

5. Wiederaufladbare Zelle nach Anspruch 1 oder 2, wobei die Rolle, die Schichten aus aktivem und Isoliermaterial umfasst, um einen Dorn herum ausgebildet ist, sodass die Rolle eine Mittelbohrung umfasst, und wobei ein Teil des Kerneinsatzes in diese Mittelbohrung eingesetzt ist und nicht elektrisch mit einer Schicht der Rolle verbunden ist.

6. Wiederaufladbare Zelle nach einem der vorhergehenden Ansprüche, wobei der Kerneinsatz ein längliches Element und eine Einsatzbasis umfasst, wobei das längliche Element in einer Mittelbohrung der Rolle angeordnet ist, und wobei die Einsatzbasis an der Basis des Außengehäuses befestigt ist, um die Rolle innerhalb des Außengehäuses abzudichten, während ein Zugriff auf den dadurch ausgebildeten, von außen zugänglichen hohlen Kern ermöglicht wird.

7. Wiederaufladbare Zelle nach Anspruch 6, wobei das längliche Element im Allgemeinen zylindrisch und hohl ist und an einem oberen Ende davon geschlossen ist.

8. Wiederaufladbare Zelle nach Anspruch 7, wobei das obere Ende des länglichen Elements durch Falten geschlossen ist.

9. Wiederaufladbare Zelle nach einem der vorhergehenden Ansprüche, wobei der Kerneinsatz aus dem gleichen Material ausgebildet ist wie das Außengehäuse der wiederaufladbaren Zelle.

10. Wiederaufladbare Zelle nach einem der vorhergehenden Ansprüche, wobei der Kerneinsatz aus Stahl ausgebildet ist.

11. Wiederaufladbare Zelle nach Anspruch 6, wobei die Einsatzbasis an die Basis des Außengehäuses geschweißt ist.

12. Wiederaufladbare Zelle nach einem der Ansprüche 1 bis 7, wobei der Kerneinsatz wenigstens zum Teil aus einem Kunststoffmaterial ausgebildet ist.

13. Akku, mehrere wiederaufladbare Zellen nach einem der vorhergehenden Ansprüche umfassend.

14. Verfahren zum Herstellen einer wiederaufladbaren Batteriezelle (100) nach einem der Ansprüche 1-12, wobei das Verfahren Folgendes umfasst:
(i) elektrisches Verbinden eines Kerneinsatzes mit einer aktiven Schicht (32a) aus einem Material, das Schichten aus aktivem und Isoliermaterial umfasst, wobei der Kerneinsatz entlang seiner gesamten axialen Länge elektrisch mit der aktiven Schicht aus Material verbunden ist, wobei der Kerneinsatz eine negative Elektrode der wiederaufladbaren Batteriezelle bereitstellt, wobei der Kerneinsatz ein längliches Element aufweist, das an einem ersten Ende davon geschlossen ist und einen Basisabschnitt an einem zweiten Ende davon aufweist;
(ii) Wickeln des Materials um den Kerneinsatz, um eine Rolle (32) und einen fest eingebauten Kerneinsatz auszubilden;
(iii) Einsetzen der Rolle und des Kerneinsatzes zusammen als eine einzelne Einheit in ein Außengehäuse (38), das eine Öffnung (46) in einer Basis (40) davon aufweist, sodass der Basisabschnitt des Kerneinsatzes durch die Öffnung hindurchläuft; und
(iv) Befestigen des Basisabschnitts des Kerneinsatzes an der Basis des Außengehäuses, um die Rolle innerhalb des Außengehäuses abzudichten und einen von außen zugänglichen hohlen Kern (34) auszubilden, der ein zentrales Kühlen der wiederaufladbaren Zelle ermöglicht, wobei das Verfahren **gekennzeichnet ist durch**:
elektrisches Verbinden des Kerneinsatzes mit der aktiven Schicht aus Material entlang der gesamten axialen Länge der aktiven Schicht der Rolle.

## Revendications

1. Élément rechargeable (100) comprenant un boîtier extérieur (38), un rouleau (32) et un capuchon de protection (36) ajusté sur une partie supérieure du boîtier extérieur, le rouleau comprenant des couches de matière active et de matière isolante disposées à l'intérieur du boîtier extérieur, une couche (32a) de matière active dudit rouleau étant connectée électriquement à une borne positive (30) à l'intérieur du capuchon de protection, l'élément rechargeable comprenant en outre un noyau creux (34) accessible depuis l'extérieur qui permet le refroidissement central de l'élément rechargeable, le noyau creux étant accessible depuis l'extérieur par une ouverture (46) ménagée dans une base (40) du boîtier extérieur opposée au capuchon de protection, et un insert de noyau, l'insert de noyau étant connecté électriquement à une couche active de matière dudit rouleau non connectée électriquement à la borne positive, et l'insert de noyau constituant une électrode de l'élément cylindrique rechargeable ; **caractérisé en ce que** :
l'insert de noyau est connecté électriquement à la couche active de matière sur toute la longueur axiale de la couche active du rouleau.

2. Élément rechargeable selon la revendication 1, dans lequel le rouleau et/ou le boîtier extérieur ont une forme au moins sensiblement cylindrique, de telle sorte que l'élément rechargeable soit un élément cylindrique rechargeable.

3. Élément rechargeable selon la revendication 1 ou 2, dans lequel le rouleau comprenant des couches de matière active et de matière isolante est formé autour d'une partie de l'insert de noyau.

4. Élément rechargeable selon l'une quelconque des revendications précédentes, dans lequel l'insert de noyau constitue une électrode négative de l'élément cylindrique rechargeable.

5. Élément rechargeable selon la revendication 1 ou 2, dans lequel le rouleau comprenant des couches de matière active et de matière isolante est formé autour d'un mandrin de telle sorte que le rouleau comprenne un alésage central, et dans lequel une partie de l'insert de noyau est insérée à l'intérieur de cet alésage central et n'est connectée électriquement à aucune couche du rouleau.

6. Élément rechargeable selon l'une quelconque des revendications précédentes, dans lequel l'insert de noyau comprend un organe allongé et une base d'insert, dans lequel l'organe allongé est disposé dans un alésage central dudit rouleau, et dans lequel la base d'insert est fixée à la base du boîtier extérieur pour fermer hermétiquement le rouleau à l'intérieur du boîtier extérieur tout en facilitant l'accès au noyau creux ainsi formé accessible depuis l'extérieur.

7. Élément rechargeable selon la revendication 6, dans lequel l'organe allongé a une forme générale de cylindre creux, et est fermé à son extrémité supérieure.

8. Élément rechargeable selon la revendication 7, dans lequel l'extrémité supérieure de l'organe allongé est fermée par sertissage.

9. Élément rechargeable selon l'une quelconque des revendications précédentes, dans lequel l'insert de noyau est formé à partir de la même matière que le boîtier extérieur de l'élément rechargeable.

10. Élément rechargeable selon l'une quelconque des revendications précédentes, dans lequel l'insert de noyau est formé à partir d'acier.

11. Élément rechargeable selon la revendication 6, dans lequel la base de l'insert est soudée sur la base du boîtier extérieur.

12. Élément rechargeable selon l'une quelconque des revendications 1 à 7, dans lequel l'insert de noyau est formé, au moins en partie, à partir d'une matière plastique.

13. Bloc-batterie comprenant une pluralité d'éléments rechargeables selon l'une quelconque des revendications précédentes.

14. Procédé de fabrication d'un élément de batterie rechargeable (100) selon l'une quelconque des revendications 1 à 12, le procédé comprenant les étapes suivantes :
(i) connecter électriquement un insert de noyau à une couche active (32a) d'une matière comprenant des couches de matière active et de matière isolante, l'insert de noyau étant connecté électriquement à la couche active de matière sur toute sa longueur axiale, l'insert de noyau constituant une électrode négative de l'élément de batterie rechargeable, l'insert de noyau comportant un organe allongé qui est fermé à sa première extrémité et une partie de base à sa deuxième extrémité.
(ii) enrouler ladite matière autour de l'insert de noyau pour former un rouleau (32) et un insert de noyau intégré ;
(iii) insérer ledit rouleau et ledit insert de noyau, ensemble en tant qu'unité unique, à l'intérieur d'un boîtier extérieur (38) pourvu d'une ouverture (46) ménagée dans une base (40) de celui-ci, de telle sorte que la partie de base de l'insert de noyau passe par ladite ouverture; et
(iv) fixer la partie de base de l'insert de noyau à la base du boîtier extérieur pour fermer hermétiquement ledit rouleau à l'intérieur du boîtier extérieur et pour former un noyau creux (34) accessible depuis l'extérieur qui permet le refroidissement central de l'élément rechargeable, le procédé étant **caractérisé par** :
la connexion électrique de l'insert de noyau à la couche active de matière sur toute la longueur axiale de la couche active du rouleau.
